# EUROPEAN PATENT APPLICATION

(11) **EP 2 437 165 A1**
(43) Date of publication of application: **04.04.2012**
(21) Application number: 10251589.7
(22) Date of filing: 13.09.2010
(51) Int. Cl.: G06F 9/455, G06F 9/50, H04L 29/08

(54) **Distributing software applications to virtual machines using genetic algorithms with already optimized initial values**

(71) Applicant: British Telecommunications Public Limited Company, London EC1A 7AJ (GB)
(72) Inventor: The designation of the inventor has not yet been filed
(74) Representative: Nash, Roger William

(57) **Abstract**

A method of allocating computers and supporting infrastructure (especially storage devices) to server components of distributed applications is disclosed. The method takes advantage of the portability of virtual machines between physical hosts. A genetic algorithm is used to generate a near optimal allocation of physical hosts to the server components of distributed applications. There is usually little difference between the near optimal allocation generated by the genetic algorithm than the optimal allocation which might be made other algorithms. Furthermore, the amount of time taken to execute the genetic algorithm is found to rise linearly with the number of allocation decisions to be made, making the allocation method more scalable than prior-art approaches.

## Description

The present invention relates to the management of distributed systems. It has particular utility in the management of hosting of server components of distributed applications in distributed systems.

It is becoming increasingly common for commercial enterprises to offer software as a service. This involves the commercial enterprise providing data processing for its customers on demand. Because the necessary computing resources are provided on demand, the set of computing resources used by the commercial enterprise in providing software as a service changes rapidly and unpredictably. In particular, the physical location of a physical computer used to provide such data processing is cannot be known in advance. The uncertainty as to the physical location of application components mean that it is difficult for the commercial enterprise to provide a predetermined quality of service to the user. The present invention alleviates this problem.

According to a first aspect of the present invention, there is provided a method of managing a distributed system to use client-server communication metrics in automatically selecting sets of physical infrastructure for server components of distributed applications and to load server components on the selected sets of physical infrastructure in accordance with said selection.

In some embodiments, the set of physical infrastructure comprises a host computer. In other embodiments the set of physical infrastructure comprises a group of host computers - e.g. a first host computer hosting a virtual machine on which a web server runs, a second host computer hosting a virtual machine on which an application server runs, a third host computer hosting a virtual machine on which a database management system runs, and storage apparatus which stores the database records.

By using client-server communication metrics in the automatic selection between plural candidate sets of physical infrastructure for one or more server components of a distributed application executable on a distributed system, an allocation of physical infrastructure resources to the server components of distributed applications is generated and used, which provides an end user with some assurance that given end-to-end infrastructure performance requirements can be met despite the unpredictability as to the whereabouts of the physical infrastructure used to provide the service.

Preferably, computational and/or storage performance metrics are used in addition to client-server communication metrics in the automatic selection of sets of physical infrastructure.

The allocation of sets of physical infrastructure to server components can be used to decide on which physical infrastructure a server component newly introduced to the infrastructure should initially be run, or to decide to which destination physical infrastructure (computers and persistent electronic data storage apparatus for example) an application already running on the infrastructure should be migrated.

Preferably, the method further comprises: calculating, for each of a plurality of individual assignments of a set of physical infrastructure to a server component of a distributed application, a suitability measure indicative of the suitability of that set of physical infrastructure for supporting that server component; and generating said allocation by generating a plurality of candidate allocations, and then applying a genetic algorithm which favours survival of candidate allocations offering a higher sum of suitability measures for the individual assignments comprised in said candidate allocation.

Finding an optimal allocation of sets of physical infrastructure to server components using a brute force search of all possible allocations quickly becomes computationally infeasible as the number of individual assignments to be made rises. The present inventors have found that a genetic algorithm gives a near optimal allocation in a few seconds, and furthermore that this is achieved in a time which only grows linearly with the number of individual assignments to be made.

In some embodiments, the initial candidate allocations for input to the genetic algorithm are generated by taking each server component in turn, and assigning that server component to the as-yet-unassigned set of physical infrastructure which has the highest suitability measure for that server component. In alternative embodiments, the initial candidate allocations for input to the genetic algorithm are generated by taking each set of physical infrastructure in turn, and assigning that set of physical infrastructure to the as-yet-unassigned server component for which that set of physical infrastructure has the highest suitability measure.

The present inventors have found that generating initial candidate allocations methodically (rather than randomly) significantly improves the speed with which a near optimal allocation is produced, and/or improves the quality of the final allocation.

In preferred embodiments, said suitability measures are calculated in a process which runs independently from the allocation process. This has the advantage of improving the speed with which the final allocation is calculated since the suitability measures have been pre-calculated.

There now follows, by way of example only, a description of embodiments of the present invention. This description refers to the accompanying drawings in which:
Figure 1 shows an ICT services network including a resource allocator;
Figure 2A is an illustrative example of an application requirements data structure used in specifying weights to be applied by the resource allocator to infrastructure performance metrics in determining a fitness score which represents the fitness of a given virtual machine host for hosting a server component of a the application;
Figure 2B is similar to Figure 2A but shows how the infrastructure performance metrics might be given different weights in relation to a second application;
Figure 3 shows a network performance data structure stored at the resource allocator recording infrastructure performance metrics;
Figure 4 shows a data centre performance data structure stored at the resource allocator recording infrastructure performance metrics;
Figure 5 illustrates a part of a fitness score matrix built by the resource allocator;
Figure 6 illustrates a fitness score matrix that might be generated in an example in which sixteen virtual machine hosts are being allocated to sixteen applications;
Figure 7 illustrates a process of generating a set of initial candidate allocations from a score matrix;
Figures 8A and 8B are two examples of initial candidate allocations generated from the score matrix of Figure 6;
Figure 9 shows a genetic algorithm useful in finding a better candidate allocation;
Figure 10 illustrates the generation of a candidate allocation from two of the initial candidate allocations.

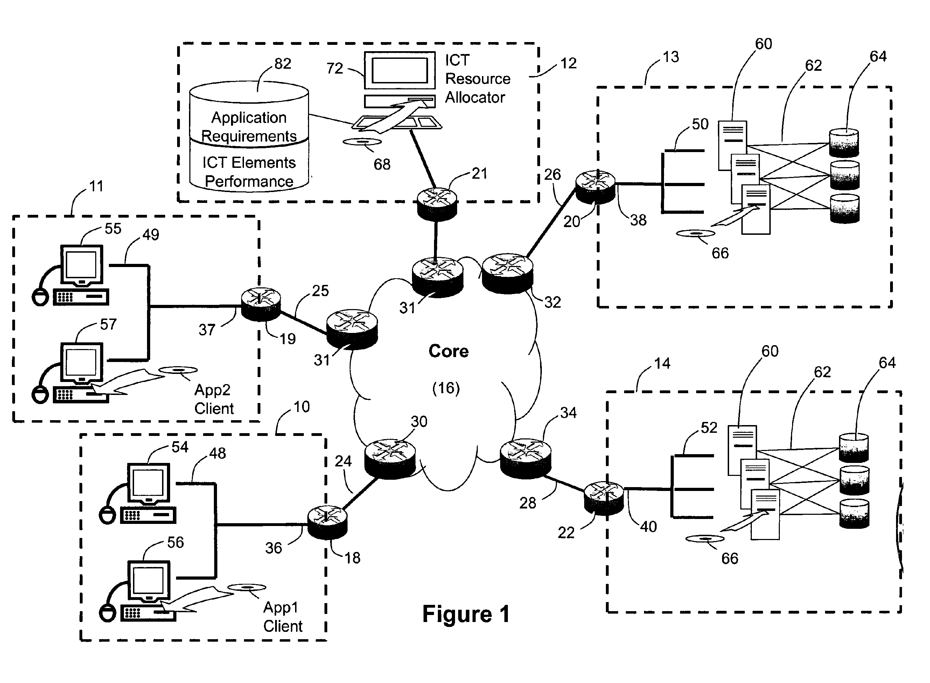

A wide-area computer network (Figure 1) has a first corporate customer's site network 10, a second corporate customer's site network 11, an Application Performance Management centre 12, and first and second data centres 13, 14. The customer's site networks 10, 11, Application Performance Management centre 12 and the two data centres 13, 14 are interconnected by a wide-area network 16. In this embodiment, the wide-area network is an internetwork. The wide-area network and the first and second data centres 13, 14 are used by an Information and Communication Technologies (ICT) services provider to provide an ICT service to the corporate customers.

The Application Performance Management centre 12 is used by the ICT services provider to manage the wide-area network and data centre resources to host server components of customers' distributed applications.

The customer site networks 10, 11, the Application Performance Management centre 12 and each data centre 13, 14, have a Customer Premises Equipment (CPE) router 18, 19, 20, 22 which is connected via an access link 24, 25, 26, 28 to an edge router 30, 31, 32, 34 in the wide-area network. In the customer site networks 10, 11 and each of the two data centres 13, 14, an internal communications link 36, 37, 38, 40 leads from the CPE router 18, 19, 20, 22 to a Local Area Network (LAN) 48, 49, 50, 52.

The customer network sites 10,11 each has one or more computers 54-57 connected to the LAN 48, 49. At least one of the computers 56 at first customer site 10 has a client component of a first customer application App1 installed upon it. At least one of the computers 57 at second customer site 11 has a client component of a second customer application App2 installed upon it.

As will be understood by those skilled in the art, the first and second data centres 13, 14 each houses, powers and cools hundreds or thousands of computers 60 and associated networking equipment 62 and storage devices 64 connected to the local network 50, 52.

At least one of those computers 60 in each data centre 13,14 has an infrastructure performance monitoring component of a distributed management application program installed from CD-ROM 66.

In each of the data centres 13, 14, a plurality of the computers 60 have virtualization software installed upon them (in the present embodiment VMware vSphere v4 available from VMWare Inc., 3401 Hillview Avenue, Palo Alto, CA 94304 USA), as well as middleware providing support for web services (in this embodiment Progress Sonic ESB available from Progress Software Corporation, 14 Oak Park Drive, Bedford, MA 01730, USA). It will be appreciated by those skilled in the art that, whilst the servers are illustrated as separately-housed computers, they will in practice be server blades or such like installed in racks. Also, in practice, the performance monitoring software will probably be downloaded over the Internet rather than being installed from CD-ROM 66. The vSphere software includes vMotion, which is software which enables the migration of the server component of a distributed application from one data centre to another. Other software (possibly software which does not offer virtualisation) enabling such migration might be used instead. When the vMotion software is executed to move a server component of a customer's distributed application between data centres, the active memory and execution state of the virtual machine hosting that component is transmitted over the network 16 from one computer 60 to another. The same software is used in this embodiment to migrate the application datastores. This avoids the additional delay which might arise between the migrated application servers at the destination data centre and the datastore at the source data centre. In this way, an entire n-tier application is migrated. The vMotion software allows the cluster of migrated virtual machines to use the same IP address in the destination data centre as they used in the source data centre. Additionally, other services used by the application server such as the Domain Name Service must have the same IP address before and after the migration.

At least one of the data centres stores a copy of the server component of the applications App1 and App2 required by the customers at the customer sites 10 and 11 respectively. The server component of each application is executable in one of the virtual machines provided by the virtualization software running on each server computer 60.

The Application Performance Management Centre 12 has an ICT resource allocation computer 72 connected via a LAN 76 to CPE router 21. The ICT resource allocation computer 72 has installed upon it middleware similar to that installed on each of the computers 60 in the two data centres 13, 14. The decision as to which of the virtual machine hosts the server component of each application is run on is made automatically by the ICT resource allocator 72 running an ICT resource allocation component of the distributed management application. The ICT resource allocation component is installed on ICT resource allocation computer 72 from CD-ROM 68. It will be understood that some of the virtual machine hosts will be in one of the data centres, and others of the virtual machine hosts will be in the other of the data centres.

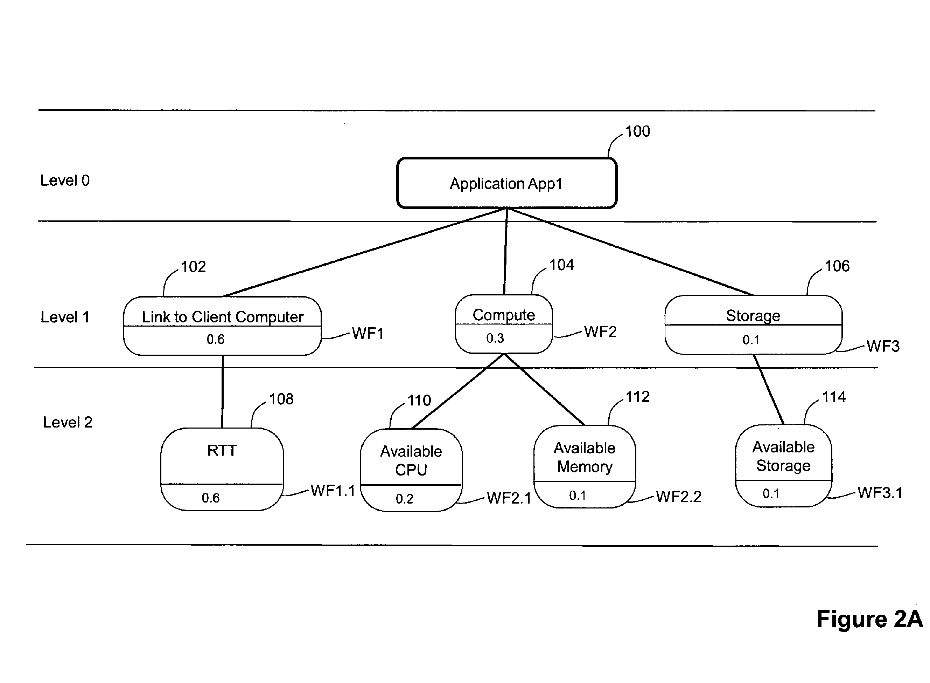

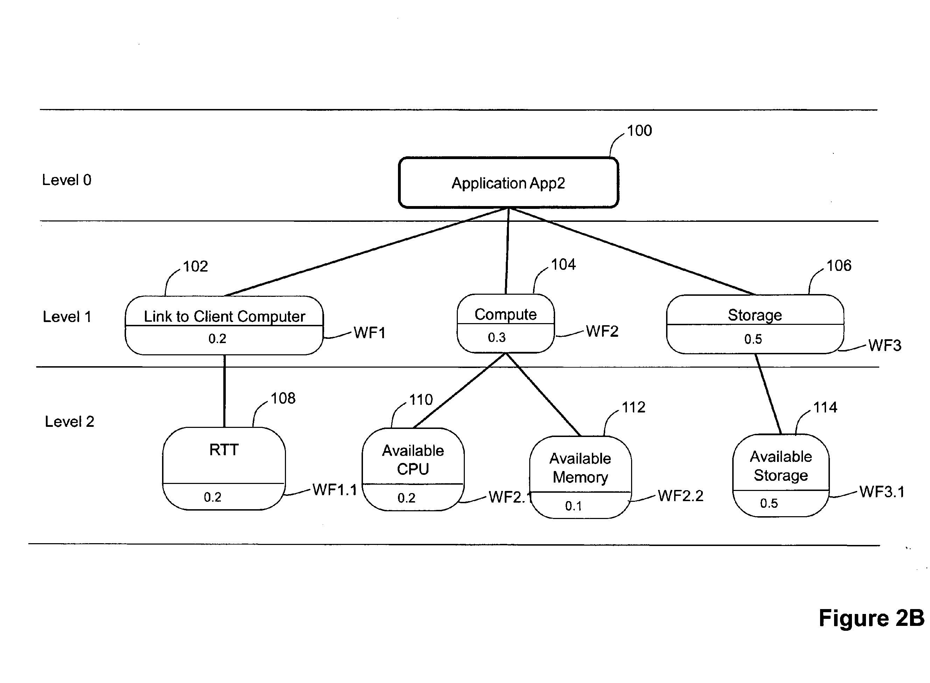

A persistent storage device 82 connected to the ICT Resource allocation computer 72 stores, for each application (App1, App2) whose performance is managed by the Application Performance Management centre 12, an application-requirements data structure (Figures 2A, 2B) which indicates the relative importance of different performance criteria for that application. It also stores an infrastructure performance data structure which is an aggregation of infrastructure performance reports received from the infrastructure performance monitoring component (from CD-ROM 66) running at each data centre 13, 14.

As will be explained in detail below, the application-to-host allocation decision component of the ICT resource allocation software is executable to derive an allocation the server computers 60 to the server components of applications (App1, App2), which takes account of the application-requirements and infrastructure performance data structures stored in the persistent storage device 82.

Each application-requirements data structure (e.g. the one illustrated in Figure 2A) stored in persistent storage device 82 is stored as a tree data structure. The top level (level 0) of the tree holds an identifier 100 of the application, the next level (level 1) identifies three different broad application requirements (102, 104, 106) - each of those requirements having an associated weighting factor (WF1, WF2, WF3) - initially set to a default value. The lowest level (level 2) of the tree contains, for each of the broader application requirements in the level above, one or more specific application requirements (108, 110; 112, 114) which fall within the broader category (102, 104, 106) above. Once again, each of the more specific application requirements (108, 110; 112, 114) has an associated weighting factor (WF1.1; WF2.1, WF2.2; WF3.1) - again, initially set to a default value.

It will be understood by those skilled in the art that the data structure (e.g. Figures 2A, 2B) is extensible to add further application requirements at different levels of the hierarchy and indeed to add further levels to the hierarchy - for example, a requirement relating to the energy consumed in running the server component of the application might be added at the broad application requirement level (level 1). In addition, or alternatively, further specific application requirements could be added at level 2 - for example, a jitter requirement might be added to the RTT requirement included with the broad 'link to client' requirement. Yet further, additional levels of hierarchy might be added - for example the available memory requirement might be broken down into an available processor cache memory and available random access memory in a further level (level 3) of the hierarchy.

In practice, the hierarchical data structure (Figures 2A, 2B) will include a comprehensive set of application requirements - but for ease of description a relatively straightforward set of requirements is illustrated and described here. To alleviate the administrator of the burden of specifying a weight for each different requirement or sub-requirement, the interface gives a default weight to 0.00 to a requirement of sub-requirement to which the administrator chooses not to apply a weighting factor. By having a comprehensive set of application requirements that is common to all applications, the subsequent allocation of server computers 60 to the server component of applications is simplified.

A review of the example weights given in Figures 2A and 2B will show that the customer for App1 places considerably more weight on the latency experienced by users of the application owing to the communication path across the network 16 than does the customer for App2.

It is to be emphasised that the metrics illustrated are only a subset of those that may be used. An important benefit of this embodiment is that any end-to-end metric can be added, changed or deleted depending on the requirement of the application. Performance parameters are scaled to provide normalised performance measures which lie within a value range common to all the different metrics. In this way, the hierarchy of weighted metrics used can vary significantly between applications (although in this particular example, the same performance parameters are used in assessing the suitability of a virtual machine host to the applications App1 and App2).

In order to enable an administrator to generate suitable weights (WF1 etc.) for each client application, the ICT resource allocation software 68 provides a user interface via the ICT resource allocation computer's keyboard, mouse and display which enables an administrator to enter the weighting factors for each of the application requirements. The weights entered by the administrator for each application requirement are automatically scaled so that the weights in each level add up to 1.00 and it is also ensured that the sum of the weights of each sub-requirement of a broader requirement add to the weight of the broader requirement.

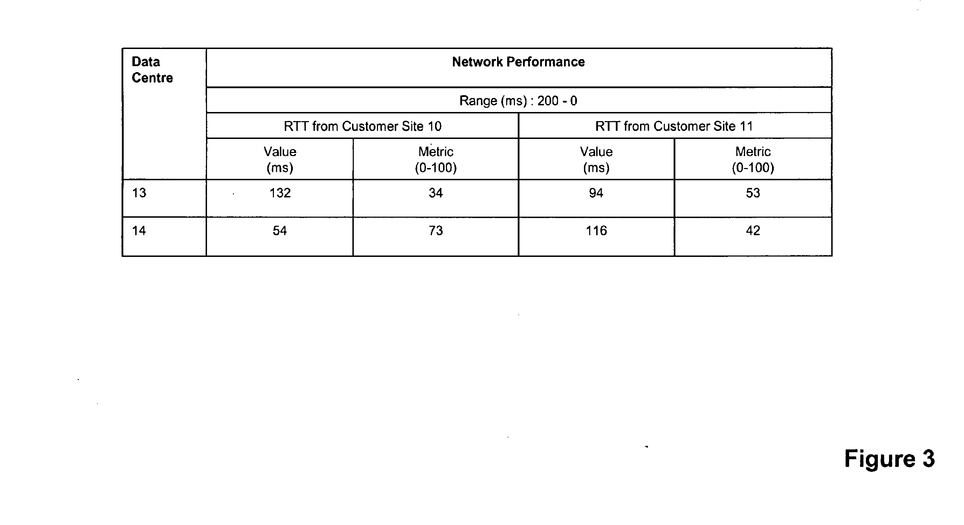

Some means for measuring, modelling or estimating each of the metrics seen in the application requirements data structure must be provided in order for those metrics to be taken into account in deciding on which virtual machine hosts to host the virtual machines hosting the server component of customers' distributed applications (App1, App2). In the present embodiment, the infrastructure performance monitoring component installed in each data centre utilises the bwPing software available from SourceForge.net to measure the Round Trip Time from the computer on which the bwPing software is running to the client computers 56 and 57. The bwPing tool is supplied with a list of client computers which is updated by an administrator each time a new customer application is requested to be hosted in the ICT services provider's distributed system (Figure 1). The network performance monitoring component then uses the middleware installed on the data centre computers and the ICT resource allocation computer 72 to send a network performance report for the connections to the various customer sites 10, 11 to the resource allocation computer 72. This report could be provided on a daily basis and include metrics gathered every half-an-hour. Each half-hour metric would be an average of three metrics found over ten-minute intervals. This reports gives the round trip time in milliseconds to each of the customer sites from that data centre. The ICT resource allocation computer 72 aggregates the reports it receives from different data centres to generate a network performance data structure (Figure 3). The infrastructure performance monitoring component also uses monitoring tools provided as part of the VSphere software product to generate a data centre performance report for the various virtual machine hosts running at the data centre and uses the middleware to send a data centre performance report to the resource allocation computer 72.

The network performance data structure (Figure 3) stored on the persistent storage device 82 associated with the ICT resource allocation computer 72 stores the Round Trip Time in milliseconds for each possible pairing of data centre to client site. In order to provide a normalised metric for that Round Trip Time, the measured round trip time is converted to a metric which represents how far along the Round Trip Time is along a range starting at, for example, 200ms and decreasing to 0ms. In this embodiment, the lower the metric, the worse the performance - however, it would of course be possible to arrange the metric to represent a cost - in other words, have a lower metric represent better performance.

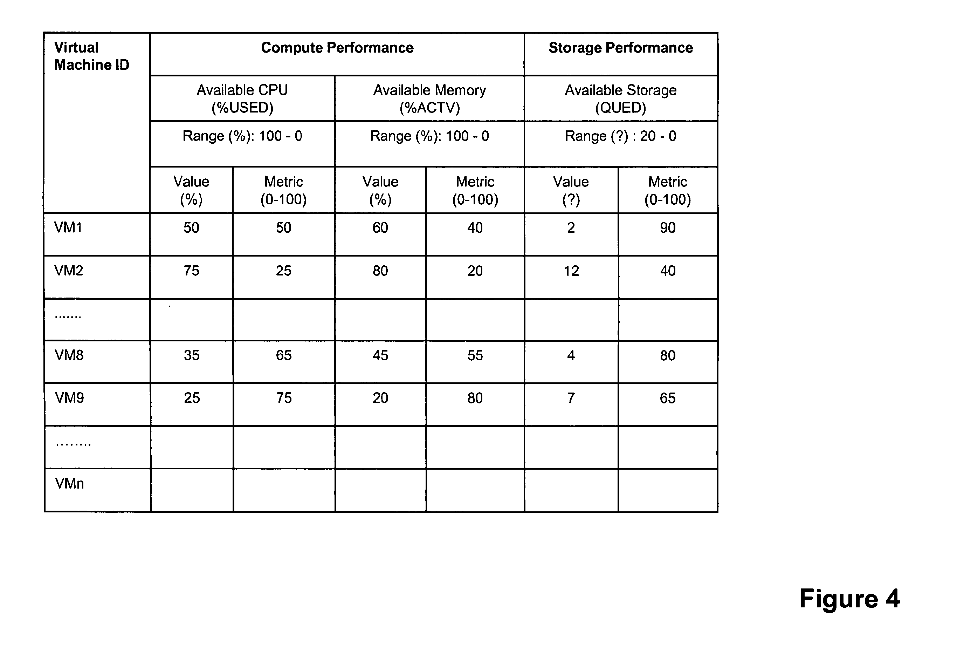

In addition to the network performance data structure (Figure 3) the ICT resource allocation computer 72 collates a data centre performance data structure (Figure 4) from the data centre performance reports it receives from the various data centres.

In the present example, the three metrics %USED, %ACTV and QUED available from the VSphere software are included in the data centre performance data structure. As with the Round Trip Time performance metrics, the values are scaled to give a metric in the common range, 0 (poor performance) to 100 (excellent performance).

A review of the example metrics given in Figure 3 will show that for App1 - which, given the example numbers seen in Figure 3, is sensitive to network delay, and whose client component runs at customer site 10 - it seems likely that the data centre 14 would be preferred by the owner of that application.

The ICT resource allocation computer occasionally or periodically calculates a fitness value for each possible pairing of application server component to virtual machine host based on the above-described application requirements data structure (Figure 2), the network performance data structure (Figure 3) and the data centre performance data structure (Figure 4).

This is calculated as a sum of the performance metrics (the values of which are available from Figures 3 and 4) which correspond to the leaf nodes of the application requirements data structure (Figure 2), weighted by the importance weightings (WF1.1, WF 2.1, WF2.2, WF3.1) stored in the application requirements data structure.

By way of example, the fitness value representing the fitness of virtual machine host VM1 for hosting App1 is calculated as:
Fitness Score of VM1 as host of App1 =
RTT weight for App1 * RTT Metric for VM1 +
CPU Available weight for App1 * CPU Available metric for VM1 +
Memory Available weight for App1 * Memory Available metric for VM1 +
Storage Available weight for App1 * Storage Available metric for VM1.

Applying the weights shown in Figure 2A and the metrics shown in Figure 3, it follows:
Fitness Score of VM1 as host of App1 = 0.6*34 + 0.2*50 + 0.1*40 + 0.3*90 = 61.4

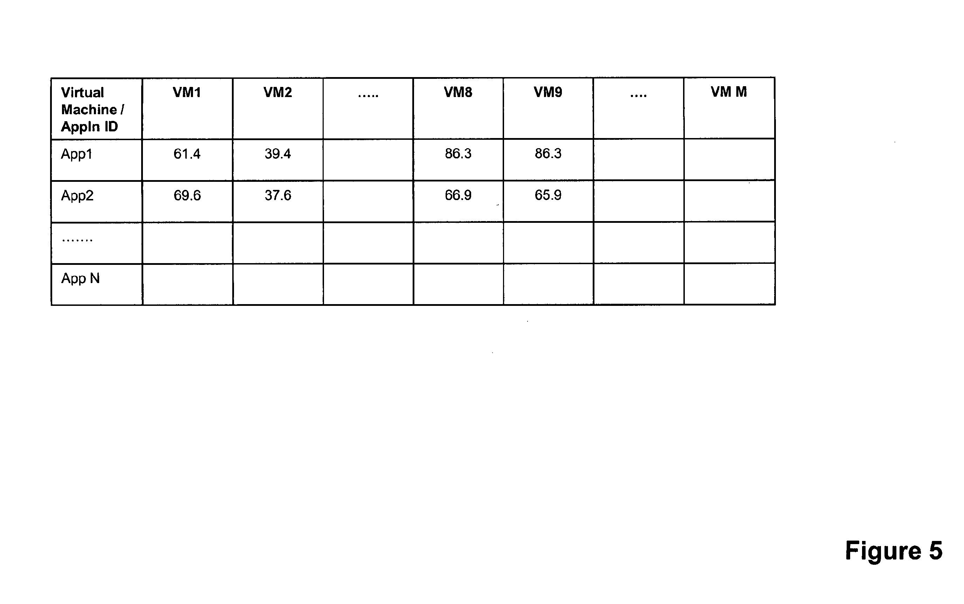

The ICT Resource Allocator carries out similar calculations for each possible combination of application and virtual machine host. An example of the fitness score matrix which results, given the performance metrics and weights so far given as examples, is shown in Figure 5.

It will be seen how the numbers seen in Figure 5 generally reflect more importance (i.e. a higher weight) being given to Round Trip Time for App1 than for App2 - leading to high scores for the virtual machine hosts (VM8 and VM9) running in the data centre with the lower Round Trip Time to customer site 10, with the scores for App2 being largely unaffected by the data centre in which App2 is placed.

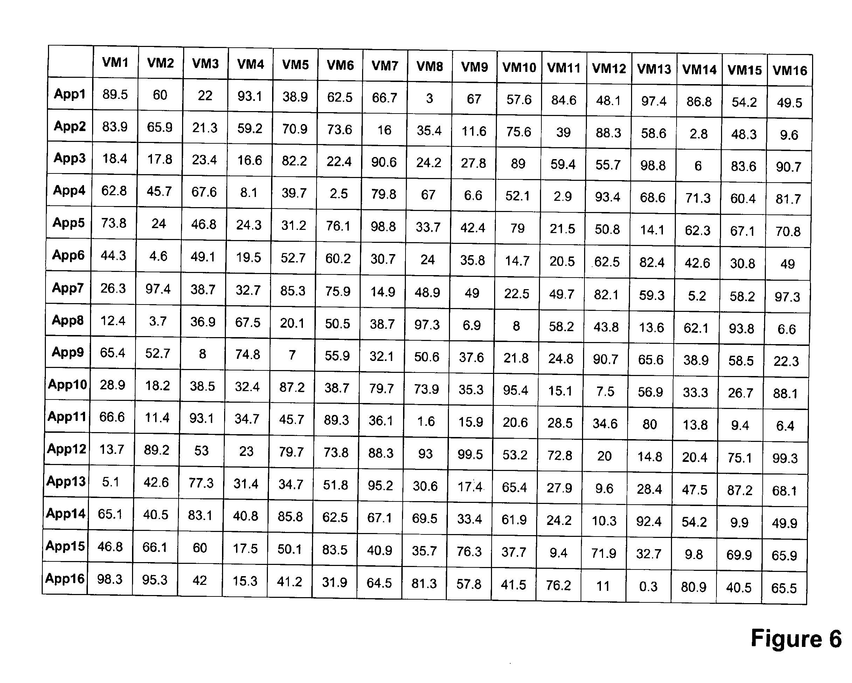

An algorithm for generating an efficient allocation of virtual machine hosts to applications will now be described with reference to Figures 6 to 10. An example fitness score matrix (Figure 6) shows the fitness scores which might be generated by the ICT resource allocation computer when allocating sixteen applications to sixteen virtual machine hosts. It is assumed that each virtual machine host will run one, and only one, server component of a distributed application.

Only 256 fitness scores need to be calculated in this case, and generally the time complexity of calculated fitness scores will be O(n²). However, the time complexity of finding the optimal available allocation of virtual machine hosts to applications via a brute-force search is much greater - O(n!). In the case of allocating sixteen virtual machine hosts to sixteen applications, for example, a fitness score for each of the 20,922,789,888,000 possible allocations would have to be calculated. It will be realised that this brute-force approach is therefore impractical.

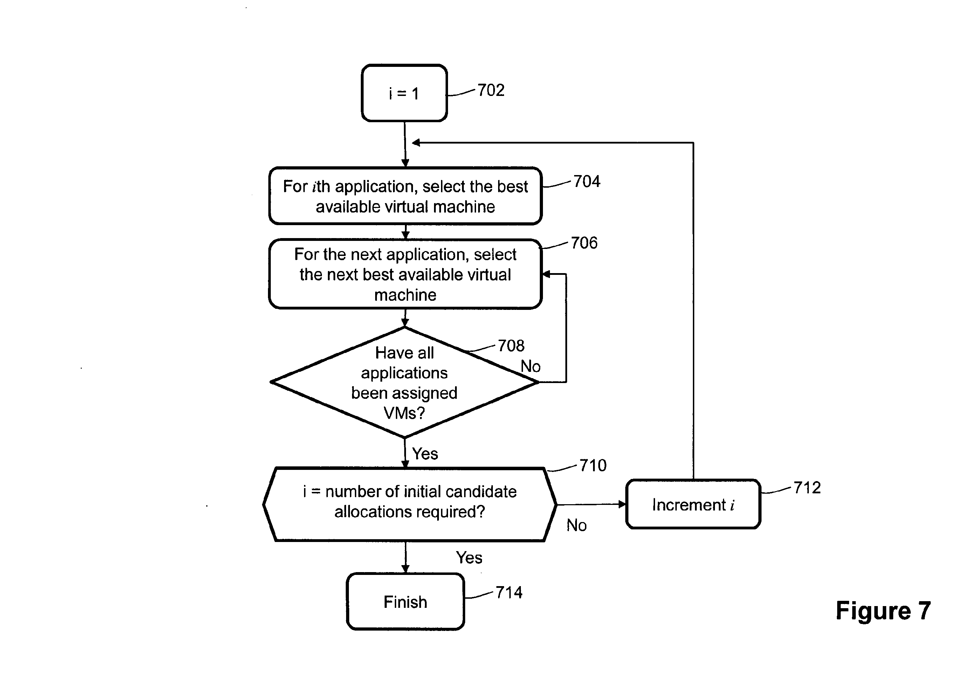

In the present embodiment, a genetic algorithm is used which is able to find an at least near-optimal solution within a practical time frame (in practice the difference between the optimal allocation, and a near-optimal allocation is likely to be of little practical importance). The operation of the genetic algorithm will now be explained with reference to Figures 7 to 10.

The genetic algorithm begins with the generation (Figure 7) of several (in this example, sixteen) candidate allocations for which a total fitness score is to be calculated (the total fitness score for an allocation being the sum of the fitness scores of the application-to-virtual machine host pairings in the allocation).

The initial candidate allocations generation begins with the setting (step 702) of a counter to 1. An initial candidate allocation generation loop of instructions (steps 704 to 712) is then repeated as many times as the number of initial candidate allocations to be generated. In the present example, sixteen initial candidate allocations are generated by repeating the initial candidate allocation generation loop of instructions (steps 704 to 712) sixteen times.

Within each iteration of the initial candidate allocation generation loop (704 to 712), an inner loop of instructions (steps 704 to 706) is carried out as many times as there are virtual machine hosts to be assigned to applications - in the present example the inner loop of instructions is carried out sixteen times in each iteration of the outer loop of instructions in order to allocate a virtual machine host to each of the sixteen applications in turn. Each iteration of the inner loop of instructions begins with the allocation 704 of a virtual machine host to the ith application, which is then followed by the allocation 706 of the best remaining virtual machine host to the next application in the list. If a test 708 finds that at least one application remains which has not been allocated to a virtual machine host, the application host selection step 706 is repeated once again before the test 708 is repeated. When all applications have been allocated a virtual machine host, then this initial candidate allocation is completed. Thereafter, a further test 710 establishes whether the requisite number of initial candidate allocations have been generated. If not, then the counter is incremented and the outer loop (704 - 712) of instructions is repeated. If the test 710 finds that the requisite number of initial candidate allocations has been generated, then the initial candidate allocations generation process ends 714.

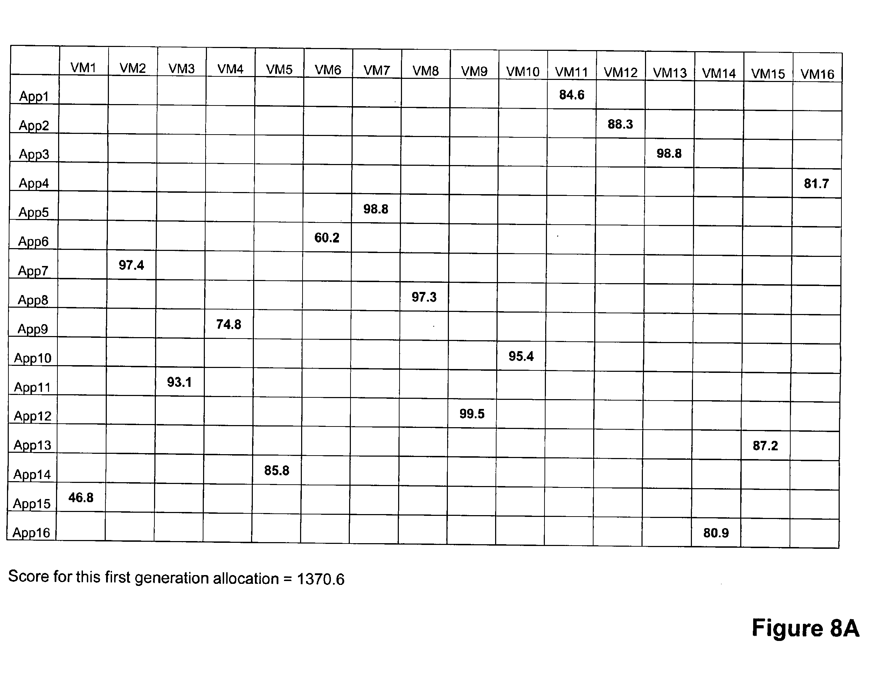

Figure 8A shows the second initial candidate allocation which is generated by the process of Figure 7 when applied to the example fitness scores seen in Figure 6. In that case, App2 is allocated to the most suitable of all the available virtual machine hosts, App3 is allocated the most suitable of all the virtual machine hosts save for the one allocated to App2, and so on until App1 is allocated the only remaining available virtual machine host.

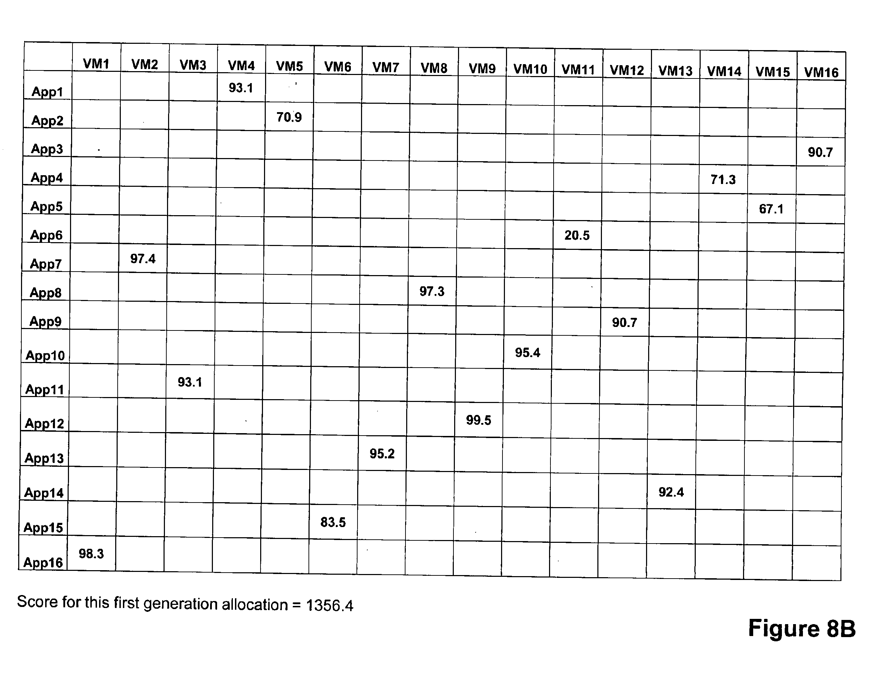

Figure 8B shows the eighth initial candidate allocation which is generated by the process of Figure 7 when applied to the example fitness scores seen in Figure 6. In that case, App8 is allocated to the most suitable of all the available virtual machine hosts, App9 is allocated the most suitable of all the virtual machine hosts save for the one allocated to App8, and so on until App7 is allocated the only remaining available virtual machine host.

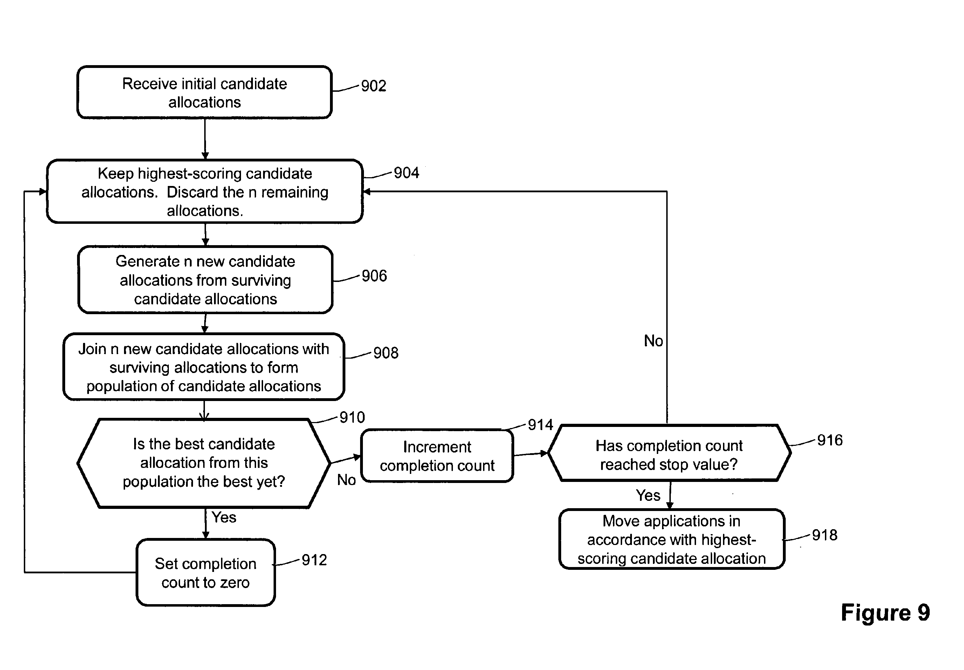

Figure 9 illustrates the genetic algorithm which, seeded by the initial candidate allocations generated by the process shown in Figure 7, calculates an efficient candidate allocation.

Having received (step 902) the set of initial candidate allocations, the genetic algorithm selects the highest-scoring half of that set, and discards the rest (step 904).

This surviving set of candidate allocations is then used to generate (step 906) new candidate allocations to replace those discarded in the selection (step 904).

This is achieved by repeatedly and randomly selecting two parent candidate allocations from the surviving candidate allocations, and creating a new child allocation from randomly selected parts of the parent candidate allocations.

To give an example, assuming that the initial candidate allocations in Figures 8A and 8B survive, the top half of Figure 8A might be used as the top half of a new candidate allocation, and then Figure 8B used as an initial possible allocation for App9 to App16.

Because no application is allocated to a virtual machine host which has already been selected to host an application, the allocation of App9 to virtual machine host 12, the allocation of App13 to virtual machine host 7, the allocation of App14 to virtual machine host 13, and the allocation of App15 to virtual machine host 6 are all forbidden.

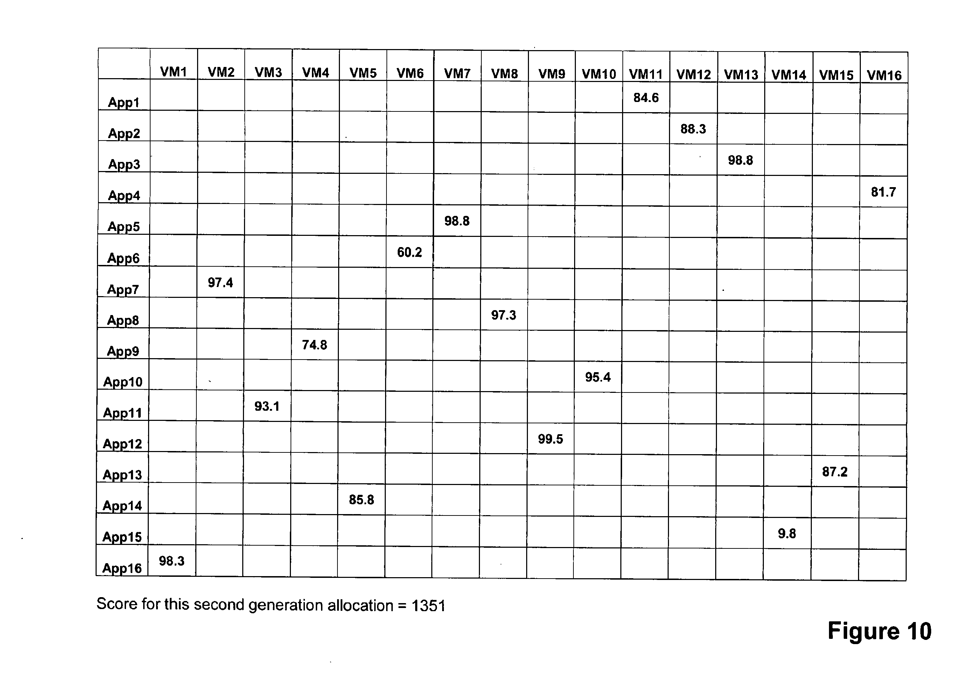

These forbidden allocations are then replaced with the best legal allocation still available (in order from lowest application number to highest application number in this example). This results in the new candidate allocation seen in Figure 10.

The same two parents are then used to generate another new candidate allocation, this time beginning with the top half of Figure 8B and trying to add the bottom half of Figure 8A.

This new candidate allocation process is carried out for four pairs of parents making up of the surviving initial applications. The score for each candidate allocation is calculated and stored along with the candidate allocation.

The ICT resource allocation computer 72 keeps track of the highest-scoring allocation to date. If a high-score test (step 910) finds that the generation (step 906) of new candidate allocations produces a higher-scoring allocation than was present in the surviving set of candidate allocations, then a completion count is reset to zero and the generation step (906) is repeated. If, on the other hand, the a high-score test (step 910) finds that the generation (step 906) of new candidate allocations does not produce a higher-scoring allocation than was present in the surviving set of candidate allocations, then a completion count is incremented (step 914).

A completion test 916 finds whether the completion count has reached a threshold value.

If the completion count has not reached the threshold value, then a further attempt (steps 904 to 912) is made to generate a better population of candidate allocations. If, on the other hand, the completion count has reached the threshold value, then it follows that a near-optimal candidate allocation has been found, and the applications App1 to App15 are moved 918 to the virtual machine hosts VM1 to VM15 in accordance with that highest-scoring allocation, and the genetic algorithm ends.

Many variations on the above described embodiments are possible, by way of example, these include:
i) in the above embodiment, a genetic algorithm was used to find a suitable allocation of hosts to the server component of application programs. In alternative embodiments, the so-called Hungarian algorithm explained in Harold W. Kuhn, "The Hungarian Method for the assignment problem", *Naval Research Logistics Quarterly,* **2**:83-97, 1955, might be used instead.
ii) in the above embodiment, the application performance manager was at a site dedicated to application performance management. In other embodiments it might be located in one of the data centres housing the computers selectable to execute the server component of the application.
iii) in the above embodiment, each application was a client-server application. It is to be understood that included within this scope are web-based applications for which the client is a standard web-browser as well as applications having an application-specific client program.
iv) the above embodiment ignored the 'cost' of migrating a virtual machine from one virtual machine host to another. In preferred embodiments, migration cost is a factor in the "fitness" score for a virtual-machine-to-application pairing. Migration cost for a user will vary depending on the geographical separation of the current and destination virtual machine hosts. Migration within the same data centre (local migration) has the lowest cost.
v) In the above embodiment, an initial candidate allocation (Figure 8A) was generated by finding the best-fitting application for one of the virtual machine hosts, and then finding the best-fitting remaining application for another of the virtual machine hosts and continuing that process until the last remaining virtual machine host is assigned the last remaining application. Other initial candidate allocations (Figure 8B) were then found by repeating the process but beginning with another of the virtual machine hosts. In other embodiments, an initial candidate allocation might be generated by finding the best-fitting virtual machine host for one of the applications, and then finding the best-fitting remaining virtual machine host for another of the applications and continuing that process until the last remaining application is assigned the last remaining virtual machine host. Other initial candidate allocations might then be found by repeating the process, but beginning with another of the applications. In yet further embodiments, the best available virtual machine host to application allocation might be found, then the best remaining available virtual machine host to application allocation and so on. To generate other initial candidate allocations, the second-best available virtual machine host to application allocation might be found, then the best remaining available virtual machine host to application allocation and so on. Alternatively, initial populations might simply be generated at random, but the above approaches are found to provide initial allocations which lead more quickly to efficient allocations.
vi) in the above embodiment, the server components of distributed applications were allocated to virtual machine hosts. In other embodiments, the server components are instead allocated to clusters of virtual machines.
vii) in some embodiments, applications may be tagged so that they are not moved from one virtual machine host to another.
viii) In a preferred variation on the above embodiment, service level agreements are stored for each application on the ICT Resource Allocator's persistent storage device 82. Metrics received from the performance monitors for each virtual machine host at each data centre 13, 14 are compared to maximum or minimum limits set for those metrics in the SLA. If those maximum or minimum limits are breached by a virtual machine host, then that application-to-host pairing is marked as not viable, and is not considered as a candidate allocation in the allocation processes described above.
ix) In the above embodiment, the application requirements tree data structure (Figures 2A, 2B), is arranged such that the weights at each level in the hierarchy add up to 1.0. In preferred embodiments, the weights of all the children of a given node add up to 1.0, and the calculation of the weighted sum is altered accordingly to arrive at the same result. The advantage of having the weights of all the children of a given node adding up to 1 is that this enables the weights to be easily validated.

In summary, a method of allocating computers and supporting infrastructure (especially storage devices) to server components of distributed applications is described above. The method takes advantage of the portability of virtual machines between physical hosts offered by modern virtualisation software. A genetic algorithm is used to generate a near optimal allocation of physical hosts to the server components of distributed applications. There is usually little difference between the near optimal allocation generated by the genetic algorithm than the optimal allocation which might be made other algorithms. Furthermore, the amount of time taken to execute the genetic algorithm is found to rise linearly with the number of allocation decisions to be made, making the allocation method more scalable than prior-art approaches.

## Claims

1. A method of managing a distributed system to use client-server communication metrics in automatically selecting sets of physical infrastructure for server components of distributed applications and to load server components on the selected sets of physical infrastructure in accordance with said selection.

2. A method according to claim 1 wherein computational and/or storage performance metrics are used in addition to client-server communication metrics in the automatic selection of sets of physical infrastructure for server components of distributed applications.

3. A method according to any preceding claim further comprising:
calculating, for each of a plurality of allocations of a set of one or more items of physical infrastructure to a server component of a distributed application, a suitability measure indicative of the suitability of that set of physical infrastructure for supporting that server component; and
generating said allocation by generating a plurality of initial candidate allocations, and then applying a genetic algorithm favours survival of candidate allocations offering a higher sum of suitability measures for the individual allocations comprised in said candidate allocation.

4. A method according to claim 3 in which the initial candidate allocations are generated by taking each server component in turn, and assigning that server component to the as-yet-unassigned set of physical infrastructure which has the highest suitability measure for that server component.

5. A method according to any preceding claim further comprising:
receiving infrastructure performance measures from respective sets of physical infrastructure in said distributed system;
deriving said suitability measures using said infrastructure communication measures.

6. A method according to claim 5 further comprising:
receiving data representing for one or more server components respective sets of weights to be given to one or more infrastructure performance measures; and
deriving said suitability measures for individual assignments of server components to sets of physical infrastructure weighting said infrastructure performance measures in accordance with the set of weights received for that server component.

7. A method according to any preceding claim further comprising:
receiving data indicative of a target performance measure required by a server component; and
preventing the assignment of said server component to a set of physical infrastructure which fails to reach said target performance measure.

8. A method according to any preceding claim in which said suitability measures are calculated in a separate process from the generation of a final allocation.

9. A computer program product or suite of computer program products tangibly embodying a program of instructions executable to carry out the method of claim 1.
